(19) Europäisches Patentamt
European Patent Office
Office européen des brevets

(11) **EP 1 515 417 A2**

(12) **EUROPÄISCHE PATENTANMELDUNG**

(43) Veröffentlichungstag:
16.03.2005 Patentblatt 2005/11

(51) Int Cl.⁷: **H02K 9/06**, H02K 9/08

(21) Anmeldenummer: 04450172.4

(22) Anmeldetag: 10.09.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **10.09.2003 AT 14272003**

(71) Anmelder: **Traktiossyteme Austria GmbH**
**2351 Wiener Neudorf (AT)**

(72) Erfinder:
• **Schulz, Rudolf**
  **3511 Furth (AT)**
• **Weiss, Christian**
  **2401 Fischamend (AT)**

(74) Vertreter: **Sonn & Partner Patentanwälte**
**Riemergasse 14**
**1010 Wien (AT)**

(54) **Gekapselte, elektrische Maschine und Verfahren zur Auslegung einer solchen Maschine**

(57)    Die Erfindung betrifft ein gekapselte elektrische Maschine, vorzugsweise eine gehäuselose Traktionsmaschine mit einem aus einem Blechpaket (10) aufgebauten Stator (1), mit einer rotierenden Welle (2), mit einem darauf befestigten aus einem Blechpaket (11) aufgebauten Rotor (3), wobei mehrere axiale Kühlkanäle (12, 13, 14) zur Führung eines fluidförmigen Kühlmediums im Statorblechpaket (10) und Rotorblechpaket (11) gleichmäßig in Umfangsrichtung verteilt angeordnet sind und zumindest zwei getrennte Kühlkreisläufe (A, B) vorgesehen sind, sowie ein Verfahren zur Auslegung einer derartigen Maschine. Zur Schaffung einer optimal gekühlten elektrischen Maschine, welche möglichst kompakt und klein aufgebaut ist, ist vorgesehen, dass die im Statorblechpaket (10) vorgesehenen radial außen liegenden Kühlkanäle (12) einen äußeren offenen Kühlkreislauf (A) bilden und dass die Kühlkanäle (13) im Stator (1) und die Kühlkanäle (14) im Rotor (3) zumindest einen weiteren inneren geschlossenen Kühlkreislauf (B) bilden, der vom äußeren Kühlkreislauf (A) getrennt ist.

Fig. 1

**Beschreibung**

Die Erfindung betrifft eine gekapselte, elektrische Maschine, vorzugsweise gehäuselose Traktionsmaschine, mit einem aus einem Blechpaket aufgebauten Stator mit einer rotierenden Welle, mit einem darauf befestigten aus einem Blechpaket aufgebauten Rotor, wobei mehrere axiale Kühlkanäle zur Führung eines fluidförmigen Kühlmediums im Statorblechpaket und Rotorblechpaket gleichmäßig in Umfangsrichtung verteilt angeordnet sind und zumindest zwei getrennte Kühlkreisläufe vorgesehen sind.

Die Erfindung betrifft weiters ein Verfahren zur Auslegung einer derartigen elektrischen Maschine, wobei mit Hilfe eines Datenverarbeitungsprogramms entsprechend der geometrischen Definition der Maschine, wie Abmessungen, Nutenform, Wicklungsart und Materialeigenschaften ein Wärmequellennetz erstellt wird; Knotenpunkte für das Wärmequellennetz festgelegt und zwischen den Knotenpunkten die thermischen Übergangswiderstände definiert werden und in den Knotenpunkten die Temperaturen für den stationären Endzustand der Maschine errechnet werden.

Seit mehr als 100 Jahren ist das Funktionsprinzip des Elektromotors bekannt, inklusive entsprechender Berechnungs- u. Auslegungsprogramme für die Herstellung. Die ersten Elektromotoren wurden noch vor der Jahrtausendwende erzeugt und eingesetzt.

Die seit damals stattgefundene Weiterentwicklung des Elektromotors wird beim Vergleich der spezifischen Leistungen von seinerzeit gebauten Motoren mit heutigen Erzeugnissen am eindruckvollsten dokumentiert. Moderne Hochleistungsmotoren haben bei vergleichbarem Volumen eine bis zu zwanzigfach größere Antriebsleistung. Auch werden immer mehr Elektromotore mit unterschiedlichen elektrischen Eigenschaften hergestellt, um den verschiedenen Einsatzbedingungen optimal zu entsprechen.

Ermöglicht wurden diese Entwicklungen in erster Linie durch eine immer genauere Kenntnis der verschiedenen zusätzlich auftretenden Effekte und vor allem der gegenseitigen Beeinflussung, wie Verstärkung, Abschwächung dieser Effekte. So verursachen z. B. moderne IGBT (Insulated Gate Bipolar Transistor)- Umrichter zur Drehzahlregelung Spannungsspitzen im Elektromotor, die berücksichtigt werden müssen, will man unliebsame Überraschungen im Betrieb vermeiden. Auch die Fortschritte in der Materialentwicklung haben die Weiterentwicklung der Elektromotoren sehr begünstigt. So ermöglicht beispielsweise die höhere Temperaturbeständigkeit der Wicklungsisolierung eine wesentlich höhere Betriebstemperatur, so dass größere spezifische Leistungen erreicht werden.

Das wichtigste Dimensionierungskriterium beim Elektromotor ist die Abfuhr der während des Betriebes entstehenden Wärme. Die Antriebsleistung des Elektromotors ist abhängig von der Stromstärke, die durch die Kupferwicklungen fließt und die benötigten Magnetfelder erzeugt. Im Prinzip ist die Antriebsleistung umso größer, je höher die Stromstärke ist. Leider begrenzen die Naturgesetze die beliebige Erhöhung der Stromstärke zur Vergrößerung der Antriebsleistung. Der Strom kann in den Kupferwicklungen nicht widerstandslos fließen. Die Ohmschen Gesetze bestimmen die Höhe dieser Verluste und damit die Menge der Verlustwärme in Abhängigkeit von der Stromstärke und dem Leiterquerschnitt. Zu den Ohmschen Verlusten kommen aber noch die verschiedensten zusätzlichen Verluste, wie beispielsweise die Eisenverluste oder etwa die Reibungsverluste der Lager hinzu. Alle diese Verluste werden in Wärme umgesetzt, die an die Umgebung abgegeben werden muss. Ist die Verlustwärme größer als die Wärme, die abgegeben werden kann, steigt die Betriebstemperatur des Elektromotors solange an, bis sich ein Gleichgewicht einstellt, bei dem die Verlustwärme gleich groß wie die abgegebene Wärmemenge ist. Übersteigt dabei die Temperatur des Elektromotors die höchst zulässige Betriebstemperatur kommt es zum Ausfall des Motors. Bei diesem Gleichgewichtszustand handelt es sich um die sogenannte Beharrung, die so definiert ist, dass sich die Temperatur innerhalb einer bestimmten Zeitspanne, beispielsweise einer Stunde nur mehr um einen bestimmten Wert, beispielsweise $1°C$ ändert.

Wärme kann nur von einem höheren Temperaturniveau zu einem niedrigeren transportiert werden. Die beispielsweise in den Kupferwicklungen auf Grund der Verluste erzeugte Wärme muss durch das Blechpaket aus Eisen und durch das Motorgehäuse nach außen geleitet werden, um an die Umgebung abgegeben werden zu können. Das heißt, zwischen Wicklung und Motorgehäuse muss ein entsprechendes Temperaturgefälle vorhanden sein, sonst wird keine Wärme transportiert, bzw. die Wicklungen sind wesentlich heißer. Da die Isolation der Wicklung der hinsichtlich Temperaturbeständigkeit schwächste Teil eines Elektromotors ist, entspricht die zulässige Betriebstemperatur des Motors der maximal zulässigen Temperatur der Wicklung.

Neben der elektrischen Auslegung ist die Gewährleistung einer sicheren Verlustwärmeabfuhr der wichtigste Teil der Motorauslegung. Das ist auch der Grund warum man schon sehr früh begonnen hat, die Motorkühlung durch verschiedene Verfahren und Verbesserungen zu optimieren.

Am einfachsten und häufigsten ist die Durchzugsbelüftung. Von einem auf der Motorwelle montierten Lüfter wird Umgebungsluft angesaugt und durch den Motor geblasen. Der große Nachteil dabei ist, dass Umgebungsluft ins Motorinnere gelangt. Ist diese Luft feucht und/oder mit Staub oder Chemikalien belastet, gelangen diese ebenfalls in den Motor und es kommt in der Folge zu Motorausfällen.

Darf auf Grund der Einsatzbedingungen, wie Nässe, Staub oder Chemikalien, die Umgebungsluft nicht in den Motor gelangen, wird dieser gekapselt und die Verlustwärme kann nur über das Motorgehäuse abgegeben werden. Zur besseren Wärmeabgabe wird das Gehäuse mit tiefen Kühlrippen ausgeführt und ein auf der Motorwelle montierter Lüfter bläst die Luft um die Kühlrippen. Der große Nachteil dieser Kühlvariante ist, dass die Verlustwärme über die Statorbleche und das Gehäuse geleitet werden muss, was die Kühlleistung trotz Rippen stark einschränkt.

Als weitere Möglichkeit zur Kühlung bietet sich die Wasserkühlung an. Dabei wird üblicherweise das Motorgehäuse als Wassermantel ausgebildet. Das Wasser kann um einiges kälter als die Umgebungstemperatur, beispielsweise im Sommer gehalten werden und außerdem ist der Wärmeübergang ins Wasser besser als in Luft, so dass eine wesentlich bessere Kühlung erreicht wird. Der große Nachteil der Wasserkühlung ist der größere Aufwand, wie ein eigener Wasserkreislauf und unter Umständen sogar ein zusätzlicher Wasserkühler, der den Motor verteuert.

Eine weitere Möglichkeit zur Motorkühlung wird, wie schon erwähnt, in der Patentschrift DE 197 16 758 C2 beschrieben. Dabei wird der Motor mit zwei von einander unabhängigen Kühlkreisläufen gekühlt.

Der innere Kühlkreislauf kühlt Wickelköpfe und Rotor und überträgt die Abwärme im Statorpaket auf den äußeren Kühlkreislauf. Diese Methode hat aber mehrere gravierende Nachteile. Der Hauptnachteil ist, dass der Wärmeaustausch zwischen den beiden Kühlkreisläufen in den Ecken der quadratisch ausgeführten Statorbleche erfolgt. Die Ecken bei einer quadratischen Form der Statorbleche sind elektrisch nicht erforderlich und müssen ausschließlich für den Wärmeaustausch zusätzlich vorgesehen werden. Der Motor wird dadurch um ca. 20 % schwerer und natürlich um einiges teurer. Der zweite große Nachteil ist die Ausgestaltung des äußeren Kühlkreislaufes. Werden die Kühlkanäle teilweise oder gänzlich in Serie geschalten, sind 180°-Rohrbögen an der Außenseite der Pressplatten notwendig, um die Kühlkanäle miteinander zu verbinden. Eine Verbindung von einem Kühlkanal zum nächsten ist in der Pressplatte fertigungstechnisch sehr kompliziert und für eine Serienfertigung zu teuer. Ein weiterer gravierender Nachteil ist der zusätzliche Aufwand für ein externes Gebläse und die Luftrückkühlung. In den Ecken der quadratischen Statorbleche können nur eine geringe Anzahl von Kühlkanälen für jeden Kreislauf untergebracht werden. Um trotzdem ausreichend Luft für eine verbesserte Wärmeabfuhr zur Verfügung zu haben, muss mit sehr hohen Luftgeschwindigkeiten gearbeitet werden. Die mehrfachen Luftumlenkungen in den Kühlkanälen bei hohen Luftgeschwindigkeiten verursachen große Druckverluste, so dass ein entsprechendes externes Gebläse notwendig wird. Das externe Gebläse mit der Luftrückkühlung und den Luftzu- und ableitungen verursachen nicht nur zusätzliche Kosten, sondern brauchen auch zusätzlichen Platz, was bei den sehr oft gegebenen eingeschränkten Platzverhältnissen unnötige Probleme schafft. Ferner werden durch die Anordnung der Kühlkanäle in den Eckbereichen künstliche Wärmenester erzeugt, da die von den Wicklungsköpfen abgeführte Wärme in serielle oder auch parallele, auf gleichem Temperaturniveau liegende, Kühlkanäle geleitet wird.

Ein geschlossener luftgekühlter elektrischer Motor ist beispielsweise auch aus der EP 387743 B1 bekannt, wobei sowohl im Rotor als auch im Stator Kühlkanäle vorgesehen sind, welche zwei Kühlkreisläufe bilden. Dabei durchbricht der durch die Kühlkanäle im Rotor gebildete innere Kühlkreislauf den durch die Kühlkanäle im Stator gebildeten zweiten Kühlkreislauf, was konstruktiv einen erheblichen Mehraufwand bedeutet. Darüber hinaus werden zwischen der Außenseite des Statorblechpakets und dem Gehäuse der Maschine ein weiterer Kühlkanal gebildet, der die Wärme der Maschine an die Umgebung abführt. Durch diese zusätzlichen Maßnahmen wird die Größe und das Gewicht der Maschine erhöht.

Auch die elektrischen Maschinen gemäß der SU 888 276 und SU 888 277 weisen mehrere Kühlkreisläufe auf, wobei ein Kühlkreislauf durch die Kühlkanäle im Rotor und Kühlkanäle unterhalb des Gehäuses der Maschine gebildet ist. Ein weiterer Kühlkreislauf wird von diesem Kühlkreislauf durchdrungen, was einen erheblichen konstruktiven Mehraufwand bedeutet.

Schließlich zeigt die DE 647 153 eine elektrische Maschine der gegenständlichen Art, wobei ein Kühlkreislauf zwischen der Außenseite des Statorblechpakets und dem Gehäuse der Maschine gebildet wird. Dadurch ist ein höherer konstruktiver Aufwand verbunden und aufgrund der zusätzlichen thermischen Übergangswiderstände eine schlechtere Kühlung bedingt.

Zur Berechnung von elektrischen Maschinen ist es beispielsweise aus dem Sonderdruck der ELIN-Zeitschrift Jahrgang XXIII, Heft 1; März 1971 "Simulation von Wärmequellennetzen" an sich bekannt, Wärmequellennetze zu erstellen und aus diesen die Temperaturen in den Knotenpunkten des Wärmequellennetzes zu berechnen. Dabei werden die Temperaturen jeweils nur für den stationären Endzustand und unter Miteinbeziehung konstanter Verluste ermittelt.

Insbesondere bei der Anwendung der elektrischen Maschinen in Schienenfahrzeugen im Nahverkehrsbereich wechseln die Belastungen mit der Zeit sehr stark. Das dynamische Verhalten derartiger Schienenfahrzeuge wird im so genannten Fahrspiel wiedergegeben, welches dem zeitlichen Betriebsdiagramm der elektrischen Maschine entspricht. Das Fahrspiel wird beispielsweise durch die Geschwindigkeit und Zugkraft der elektrischen Maschine in Abhängigkeit der Zeit definiert. Eine Berücksichtigung des dynamischen Verhaltens der Maschine bei der Berechnung und Auslegung der elektrischen Maschine findet derzeit nicht statt. Daraus resultiert, dass die elektrischen Maschinen nicht optimal an die jeweiligen Gegebenheiten angepasst werden. Als Folge davon werden die elektrischen Maschinen in Schienenfahrzeugen entweder überdimensioniert, wodurch unnötiger Platzverbrauch und unnötiges Gewicht mitgeführt werden oder unterdimensioniert, was die Lebensdauer der elektrischen Maschine reduziert.

Aufgabe der Erfindung ist es daher, eine elektrische Maschine der eingangs zitierten Art zu schaffen, die einerseits die oben aufgezeigten Nachteile vermeidet und die anderseits auf Grund ihrer Konstruktion sowohl optimale elektrische wie auch maßtechnische Eigenschaften aufweist.

Eine weitere Aufgabe der vorliegenden Erfindung besteht in der Schaffung eines Verfahrens zur Auslegung einer oben genannten elektrischen Maschine, durch welches die realen Bedingungen im Betrieb der elektrischen Maschine berücksichtigt werden und somit die Maschine optimal auf den jeweiligen Einsatz abgestimmt werden kann.

Die erste erfindungsgemäße Aufgabe wird durch eine oben genannte elektrische Maschine gelöst, wobei die im Statorblechpaket vorgesehenen radial außenliegenden Kühlkanäle einen äußeren offenen Kühlkreislauf bilden und die Kühlkanäle im Stator und die Kühlkanäle im Rotor zumindest einen weiteren inneren geschlossenen Kühlkreislauf bilden, der vom äußeren Kühlkreislauf getrennt ist.

Mit dieser Erfindung ist es erstmals möglich, eine elektrische Maschine, insbesondere einen Traktionsmotor, herzustellen, die für den jeweiligen Anwendungsbereich, nämlich als Antriebsmaschine für Fahrzeuge, insbesondere Schienenfahrzeuge, eine besonders kompakte Bauweise aufweist und auch in Hinblick auf ihre elektrischen Eigenschaften die gesteckten Erwartungen und Ziele erfüllt. Insbesondere bei Traktionsmaschinen besteht immer die Forderung nach kleiner Bauweise und großer elektrischer Leistung. Diese Forderung kann mit der Erfindung durch einen optimalen Kompromiss erfüllt werden. Durch die erfindungsgemäße Anordnung der beiden Kühlkreisläufe wird ein maximierter Kühleffekt erreicht, wodurch eine höhere elektrische Ausnützung der Blechpakete möglich ist. Eine kleinere Maschinenbauweise bei vergleichbarer höherer elektrischer Leistung ist die Folge. Darüber hinaus ist der Motor gekapselt, so dass trotz Verwendung von Umgebungsluft keine Schäden an den Wicklungen durch Feuchtigkeit oder Staub entstehen können. Dadurch dass die Kühlkreisläufe einander nicht durchbrechen ist ein reduzierten konstruktiver Aufwand verbunden. Weiters findet im Stator zwischen dem inneren geschlossenen Kühlkreislauf und dem äußeren offenen Kühlkreislauf ein Wärmeaustausch statt, durch den eine besonders effiziente Kühlung der elektrischen Maschine möglich wird.

Vorzugsweise ist als Kühlmedium, ein gasförmiges Medium, vorzugsweise Umgebungsluft, vorgesehen. Bei den Temperaturverhältnissen am Motor wird der Hauptteil der Wärme durch Konvektion abgegeben. Der Wärmeübergang ist in gasförmigen Kühlmedien wesentlich schlechter als in Flüssigkeiten. Gasförmige Kühlmedien sind aber viel einfacher handzuhaben und daher im Betrieb wesentlich billiger. Am billigsten ist dabei die Verwendung von Umgebungsluft, die einfach angesaugt und nach der Kühlung wieder an die Umgebung abgegeben wird. Der große Vorteil der Erfindung liegt in der Ausgestaltung des äußeren Kühlkreislaufes, so dass ohne externe Zusatzeinrichtungen Umgebungsluft als Kühlmedium eingesetzt werden kann.

Vorteilhafterweise ist das Statorblechpaket aus annähernd runden oder elliptischen und/oder regelmäßigen vieleckigen Statorblechen gebildet.

Zur Bewegung des Kühlmediums für den äußeren Kühlkreislauf kann auf der Welle ein Lüfter angeordnet sein. Das Kühlmedium strömt auf der einen Seite des Statorblechpaketes in die Kühlkanäle, durchströmt diese nur einmal, ohne Umlenkungen, und tritt auf der anderen Seite ungehindert wieder aus. Durch diese einfache Kühlluftführung genügt der Lüfter auf der Motorwelle, um so ausreichende Strömungsgeschwindigkeiten zu erzielen, damit wesentlich größere Wärmemengen als bei allen anderen Kühlvarianten abgeführt werden können. Natürlich kann auch ein extern angetriebener Lüfter für die Durchströmung des äußeren offenen Kühlkreislaufes verwendet werden, was jedoch wieder eine externe Energiezuführung und einen konstruktiven Mehraufwand erfordert.

Vorteilhafterweise ist auch auf der Welle oder dem Rotor ein Lüfter zur Bewegung des Kühlmediums für den weiteren inneren Kühlkreislauf angeordnet.

Nach einem ganz besonderen Merkmal der Erfindung verläuft die Strömungsrichtung des Kühlmediums im inneren Kühlkreislauf im Stator entgegengesetzt zur Strömungsrichtung des Kühlmediums im äußeren Kühlkreis. Die Führung des äußeren, kühleren Mediums im Gegenstrom zum inneren, heißeren Kreislauf bringt den Vorteil, dass bei entsprechender wärmetechnischer Auslegung, die Austrittstemperatur des zu kühlenden inneren Kreislaufes niedriger gehalten werden kann als die Austrittstemperatur des kühlenden, äußeren Kreislaufes. Somit kann dadurch das Temperaturniveau des inneren Kühlkreislaufes bei gleicher Kühlleistung um etliche Grade tiefer gehalten werden, was sich sehr positiv auf die Lebensdauer der Maschine auswirkt.

Gemäß einer besonderen Ausgestaltung der Erfindung besteht der Stator aus vorzugsweise gestanzten, Statorblechen und ist über Pressplatten und Zugleisten verpresst und verschweißt und die axialen Kühlkanäle sind vorzugsweise als Bohrungen ausgeführt, wobei die Kühlkanäle für den äußeren und den inneren Kühlkreislauf jeweils auf einem Teilkreis zur Wellenachse angeordnet sind. Je mehr Kühlkanäle für jeden Kühlkreislauf vorhanden sind, desto größer ist die Kühlleistung und desto niedriger kann die Betriebstemperatur des Motors gehalten werden. Der Vorteil liegt in der Anordnung der Kühlkanäle jeweils in Kreisen um die Motorwelle, weil bei kreisförmiger Anordnung die meisten Kühlkanäle unterzubringen sind. Die erfindungsgemäße Anordnung der Kühlkanäle garantiert bei gleichen Temperaturverhältnissen die größtmögliche Wärmeabfuhr. Ferner kann dadurch eine gekapselte, aber trotzdem gehäuselose Maschine wirtschaftlich hergestellt werden.

Nach einer besonderen Weiterentwicklung der Erfindung weisen die Kühlkanäle, insbesondere sektorweise, unterschiedlichen Durchmesser auf. Davon kann insbesondere für die den äußeren offenen Kühlkreislauf bildenden Kühlkanäle im Statorblechpaket Gebrauch gemacht werden. Obwohl sehr viel Verlustwärme durch den äußeren Kühlkreislauf abtransportiert wird, findet ein Wärmetransport auch über die Statorbleche an die Oberfläche des Statorblechpaketes statt. Von der Oberfläche wird die Wärme durch Konvektion an die Umgebung abgegeben. Wird die Konvektion durch Motorteile, wie z. B. die Motorfüße oder Aufhängungen gestört, kann in diesem Bereich nicht mehr ungehindert Wärme abfließen. Dadurch steigt die Temperatur in diesem Bereich an und es kommt zu kritischen Spannungen und teilweise zu unkontrollierten Deformationen, die zum vorzeitigen Ausfall der Lager des Motors führen können. Ein weiterer Vorteil der Erfindung ist die sektorweise Anordnung von größeren Kühlkanälen, die durch die Querschnittsvergrößerung auch mehr Wärme abtransportieren. Damit kann der Wärmestau infolge der gestörten Konvektion ausgeglichen werden, so dass keine Deformationen auftreten können. Mit dieser Weiterentwicklung kann die Wärmeabfuhr quasi gesteuert werden. Wie ja an sich bekannt, gibt es in der Maschine Bereiche, die sehr heiß, beispielsweise nahe den Wicklungsköpfen, sind und welche die relativ kalt, beispielsweise nahe den Lagerdeckeln, sind. So wird diesen Tatsachen Rechnung getragen und eine gezielte optimierte Wärmeabfuhr erreicht.

Gemäß einer besonderen Weiterentwicklung der Erfindung sind die Kühlkanäle im Stator und/oder Rotor auf zwei Teilkreisen zur Wellenachse angeordnet, wobei die Kühlkanäle radial versetzt sind. Zwischen den einzelnen Kühlkanälen müssen aus elektromagnetischen aber auch aus Festigkeitsgründen relativ breite Blechstege verbleiben, die von den seitlichen Kühlkanälen nur ungenügend gekühlt werden können. Werden jedoch zwei oder mehrere Kreise mit Kühlkanälen angeordnet, wo die Kühlkanäle jeweils versetzt zueinander sind, können auch die dazwischen liegenden Blechstege ausreichend gekühlt werden. Das bringt den Vorteil einer ziemlich gleichmäßigen Temperaturverteilung und eine Reduzierung der Wärmespannungen.

Nach einem besonderen Merkmal der Erfindung wird der innere Kühlkreislauf über Lagerschilde vom äußeren Kühlkreislauf getrennt. Damit wird der innere Kühlkreislauf ohne besondere zusätzliche Einbauten optimal geführt. Natürlich wird auch über die Lagerschilde Wärme abgeführt, so dass der Kühlkreislauf unterstützt wird.

Gemäß einem weiteren Merkmal der Erfindung ist vorgesehen, dass die Lagerschilde innen und/oder außen eine verrippte Oberfläche aufweisen. Die innere Verrippung der Lagerschilde wird zur Führung bzw.

Umlenkung des Kühlmediums herangezogen. Die äußere Verrippung dient zur Vergrößerung der Oberfläche und zur Erhöhung der mechanischen Festigkeit.

Gemäß einer Ausgestaltung der Erfindung weist mindestens ein Lüfter eine Deck- und eine Tragscheibe auf, wobei zwischen der Deck- und der Tragscheibe Flügel vorgesehen sind. Mit derartigen Lüftern wird quasi eine Druckkammer aufgebaut, die eine Zwangsströmung des Kühlmediums erzeugt. Dadurch kann insbesondere der innere Kühlkreislauf bei jedem Betriebszustand mit einem optimalen Wirkungsgrad betrieben werden.

Nach einem weiteren besonderen Merkmal der Erfindung ist der Kühlmediumfluss mindestens für einen Kühlkreislauf in Abhängigkeit von der Drehzahl der Maschine geregelt. Durch die Einbeziehung der Maschinendrehzahl auf den Kühlmediumfluss, sei es Strömungsgeschwindigkeit, Druck oder Menge, kann ebenfalls eine besonders vorteilhafte Wärmeabfuhr erreicht werden. Bei Einsatzbedingungen in denen der Motor mit steigender Drehzahl höhere Leistungen abgeben muss und daher die Verlustwärme drehzahlabhängig zunimmt, ist eine drehzahlabhängige Vergrößerung des Kühlmittelmassestroms die einzige Möglichkeit die drehzahlabhängige Erwärmung und letztlich Überhitzung des Motors in den Griff zu bekommen. Ein wesentlicher Vorteil der Erfindung ist die Anordnung der Lüfter für die Kreisläufe auf der Motorachse. Dadurch wird je nach Motordrehzahl mehr oder weniger Kühlluft durch die Kühlkanäle geleitet und damit auf sehr einfache Weise die Verlustwärmeabfuhr mit der Drehzahl gekoppelt. Es kann damit sichergestellt werden, dass der Motor auch bei wechselnder Leistungsaufnahme auf weitgehend gleichmäßiger Betriebstemperatur bleibt, was die Lebensdauer sehr positiv beeinflusst.

Gemäß einem alternativen besonderen Merkmal der Erfindung ist der Kühlmediumfluss mindestens für einen Kühlkreislauf in Abhängigkeit von der Temperatur im Stator- und/oder Rotorblechpaket der Maschine geregelt. Auch die Einbeziehung dieser Parameter für die Kühlmittelsteuerung bringt vorteilhafte Effekte bei der Kühlung der Maschine.

Nach einer besonderen Ausgestaltung der Erfindung ist zur Berechnung und Auslegung der elektrischen Maschine ein Datenverarbeitungsprogramm vorgesehen, das zur Ermittlung von Zustandsgrößen, insbesondere der Temperaturen und Wärmeströme, für den stationären Endzustand und/oder für den dynamischen Fahrbetrieb, in der elektrischen Maschine dient, wobei dieses Datenverarbeitungsprogramm die Berechnungen über ein Wärmequellennetz unter Berücksichtigung der Kühlmittelströme durchführt. Mit einem derartigen Datenverarbeitungsprogramm kann gezielt auf Kundenwünsche eingegangen werden und eine wirtschaftliche Lösung erarbeitet werden.

Die zweite erfindungsgemäße Aufgabe wird durch ein Verfahren zur Auslegung einer oben erwähnten elektrischen Maschine gelöst, wobei mit Hilfe eines Datenverarbeitungsprogramms entsprechend der geometrischen Definition der Maschine, wie Abmessungen, Nutenform, Wicklungsart, Materialeigenschaften ein Wärmequellennetz erstellt wird; Knotenpunkte für das Wärmequellennetz festgelegt und zwischen den Knotenpunkten die thermischen Übergangswiderstände definiert werden und in den Knotenpunkten die Temperaturen für den stationären Endzustand der Maschine errechnet werden, wobei bei der Erstellung des Wärmequellennetzes die Kühlmittelströme miteinbezogen werden und die Temperaturen in den Knotenpunkten für den dynamischen Zustand der Maschine errechnet werden, indem in die Berechnung der Verluste für die einzelnen Knotenpunkte und/oder der thermischen Übergangswiderstände zwischen den einzelnen Knotenpunkten, das dynamische Verhalten im Betrieb, insbesondere das Fahrspiel berücksichtigt wird, wobei die thermischen Übergangswiderstände zwischen den einzelnen Knotenpunkten durch die thermischen Kapazitäten der entsprechenden Regionen der Maschine ergänzt werden.

Mit diesem Verfahren ist es erstmals möglich eine elektrische Maschine zu berechnen und zu konstruieren, deren Auslegung nahe der Belastungsgrenze liegt. Dadurch kann eine sehr kompakte Bauweise, die insbesondere bei Traktionsmaschinen gefordert wird, erreicht werden. Das vorliegende Verfahren zur Auslegung elektrischer Maschinen ist gegenüber der bekannten Anwendung von Wärmequellennetzen dadurch ergänzt, dass nicht nur der statische Zustand der Maschine sondern der dynamische Zustand berücksichtigt wird. Dies ist bei der Auslegung bei elektrischen Maschinen, insbesondere für Schienenfahrzeuge im Nahverkehrsbereich, wo es häufig zu Belastungswechseln kommt, sehr wichtig. Erreicht wird die Berücksichtigung des dynamischen Verhaltens der Maschine durch die Aufnahme der thermischen Kapazitäten in die thermischen Übergangswiderstände. Es handelt sich bei den Übergangswiderständen des Wärmequellennetzes nunmehr nicht um reale, sondern um komplexe Übergangswiderstände. Dadurch kann die zeitliche Abhängigkeit der Maschinenparameter, welche während des Fahrspiels auftritt, kann dadurch berücksichtigt werden. In der Praxis werden für das jeweilige Fahrspiel die Drehzahl, Geschwindigkeit und elektrische Verluste, wie Eisenverluste, Kupferverluste im Stator und Rotor in Abhängigkeit der Zeit berechnet und in die thermische Berechnung anhand des Wärmequellennetzes einbezogen. Dabei werden mit entsprechenden mathematischen Programmen die resultierenden Differenzialgleichungen gelöst und in den jeweiligen Knotenpunkten des Wärmequellennetzes die zeitlichen Verläufe der Temperaturen ermittelt. Zur Auslegung der elektrischen Maschine wird das jeweilige Fahrspiel, welches das dynamische Verhalten der elektrischen Maschine definiert, sooft wiederholt bis sich ein Gleichgewicht, die so genannte Beharrung einstellt. Diese Temperaturwerte im Zustand des Gleichgewichts bzw. während der Beharrung werden nunmehr als Grenzwert der Temperatur für die Auslegung der elektrischen Maschine herangezogen. Sind die in den jeweiligen Knotenpunkten auftretenden maximalen Temperaturen unter den Grenzwerten, kann die Maschine, beispielsweise kleiner ausgeführt werden. Liegt die Temperatur über den zulässigen Grenzwerten muss die Maschine größer ausgeführt werden.

Gemäß einem besonderen Merkmal der Erfindung wird mindestens jeweils ein Knotenpunkt für die Zähne im Stator und im Rotor, für die Nuten jeweils im Stator und im Rotor, für den Luftspalt, für das Statorjoch, für das Rotorjoch, für jede Seite des Wickelkopfes und für den Kurzschlussring auf jeder Seite festgelegt. Bei einer derartigen Berechnung müssen die Verluste, wie Stator-, Rotor-, Eisen- und Zusatzverluste sowie auch die mechanischen Verluste, berücksichtigt werden.

Nach einem weiteren besonderen Merkmal der Erfindung wird im Statorjoch und den angrenzenden Konstruktionsteilen mindestens ein weiterer Knotenpunkt, vorzugsweise im Bereich und/oder zwischen den Kühlkreisläufen, festgelegt und der zwischen den Knotenpunkten auftretende Übergangswiderstand berechnet. Mit einer derartigen Festlegung der Knotenpunkte kann eine gute Näherung an die tatsächlichen Maschinendaten im Betrieb erreicht werden. Man kann sich also den Grenzwerten der Maschine nähern.

Gemäß einer besonderen Ausgestaltung der Erfindung wird im Rotorjoch im Bereich des Kühlkreislaufes mindestens ein weiterer Knotenpunkt festgelegt. Auch ein derartiger Knotenpunkt führt an die Grenzwerte der Maschine heran. Eine bewusste Annäherung an die Grenzwerte einer Maschine führt meist zu einer optimalen, also kleineren, Bauweise.

Nach einer Weiterbildung der Erfindung werden bei der Berechnung der thermischen Übergangswiderstände zwischen den Knotenpunkten; die Drehzahl der Maschine und/oder die Strömungsgeschwindigkeit und/oder Menge des Kühlmittels während des Fahrspiels berücksichtigt. Daraus ergibt sich, dass die Maschine nicht auf die Temperaturen des stationären Endzustandes berechnet wird, sondern auf die tatsächlichen Werte im dynamischen Betrieb entsprechend dem Fahrspiel der Traktionsmaschine. Bei Traktionsmaschinen sind die Verluste von der Drehzahl und der Belastung, also dem Drehmoment, abhängig, wobei die Drehzahl und die Belastung dem Fahrspiel der Traktionsmaschine praktisch proportional sind.

Gemäß einer Weiterbildung der Erfindung werden bei der Berechnung der Verluste für die Knotenpunkte und/oder der thermischen Übergangswiderstände zwischen den Knotenpunkten die Temperaturabhängigkeit der Materialien mittels eines Temperaturfaktors berücksichtigt. Dadurch werden bei der Berechnung der Maschine die Materialeigenschaften der einzelnen Komponenten berücksichtigt.

Nach einer weiteren Ausgestaltung der Erfindung werden aus den errechneten Werten der Temperaturen für den dynamischen Zustand der Maschine, insbesondere während des Fahrspiels Mittelwerte berechnet. Insbesondere die Traktionsmaschine wird Belastungen durch den Stopp/Go-Betrieb, also Wechselbelastungen, ausgesetzt. Um diese Wechselbelastungen für die Berechnung in vernünftige Werte fassen zu können werden Simulationen durchgeführt und daraus Mittelwerte genommen. So werden beispielsweise aus dem tatsächlichen Fahrspiel im Zuge der dynamischen Berechnung die Temperaturverläufe gerechnet.

Gemäß einem besonderen Merkmal der Erfindung werden bei der Berechnung der thermischen Übergangswiderstände zwischen den Knotenpunkten Korrekturfaktoren eingeführt, die vorzugsweise aus Erfahrungswerten gebildet werden. Wie sich in der Praxis gezeigt hat, ist es für die Berechnung sehr vorteilhaft, wenn empirische Werte, wie Erfahrungswerte als Korrekturfaktoren eingesetzt werden.

Die Erfindung wird an Hand von Ausführungsbeispielen, die in den Zeichnungen dargestellt sind, näher erläutert. Darin zeigen:

Fig. 1 eine doppelt durchzugsbelüftete elektrische Maschine im Querschnitt;
Fig. 2 und 3 Ausführungen von Blechen; und
Fig. 4 eine Struktur eines Wärmequellennetzwerkes für eine doppelt durchzugsbelüftete elektrische Maschine als Prinzipschaltbild.

Einführend sei festgehalten, dass in der beschriebenen Ausführungsform gleiche Teile bzw. Zustände mit gleichen Bezugszeichen bzw. gleichen Bauteilbezeichnungen versehen werden, wobei die in der gesamten Beschreibung enthaltenen Offenbarungen sinngemäß auf gleiche Teile bzw. Zustände mit gleichen Bezugszeichen bzw. gleichen Bauteilbezeichnungen übertragen werden können.

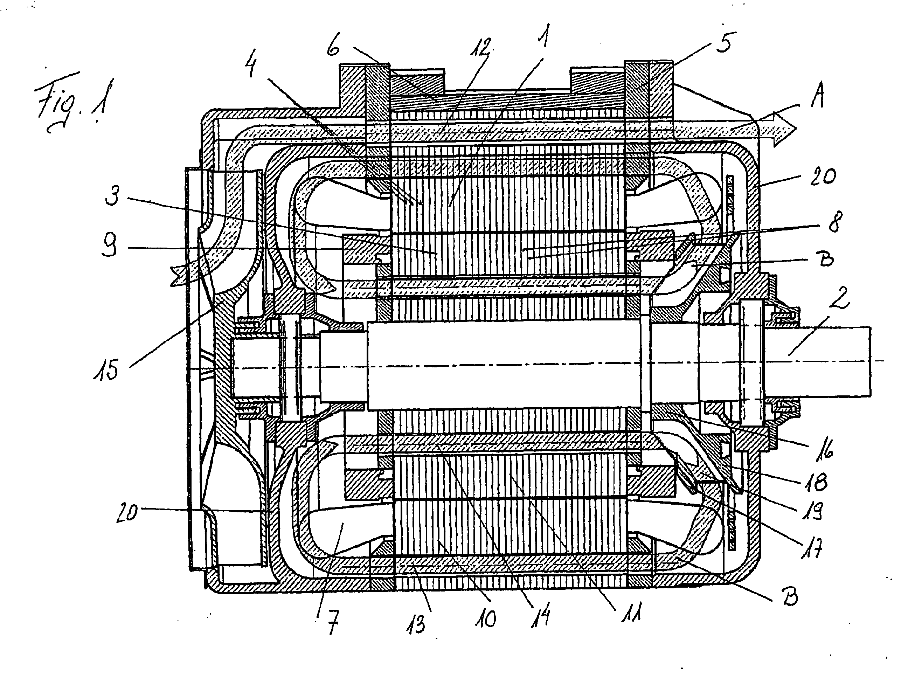

Gemäß der Fig. 1 ist eine gekapselte, elektrische Maschine im Querschnitt dargestellt, wobei diese Maschine für den Traktionsbetrieb konstruiert ist. Es sei darauf hingewiesen, dass die Schnittansicht gemäß Fig. 1 nicht entlang einer geraden Schnittlinie verläuft, wodurch eine gewisse Asymmetrie in der Darstellung auftritt. Insbesondere beim Traktionsbetrieb werden derartige Maschinen, die gehäuselos ausgeführt sind, eingesetzt. Die Maschine besteht aus einem Stator 1 und einem, auf einer rotierenden Welle 2 befestigten Rotor 3. Sowohl der Stator 1, wie auch der Rotor 3 ist aus einzelnen, zu Blechpaketen zusammengefügten Blechen aufgebaut.

Der Stator 1 besteht aus gestanzten Statorblechen 4, die zum Statorblechpaket 10 geschichtet werden und ist über Pressplatten 5 und Zugleisten 6 verpresst und verschweißt. Weiters ist im Stator 1 die Wicklung mit den seitlich herausragenden Wickelköpfen 7 angeordnet.

Der Rotor 3 besteht ebenfalls aus gestanzten Rotorblechen 8, die zum Rotorblechpaket 11 geschichtet werden und weist die Rotorwicklung mit den Kurzschlussringen 9 auf.

Sowohl im Statorblechpaket 10, wie auch im Rotorblechpaket 11 sind Kühlkanäle 12, 13, 14 vorgesehen. Die nahe dem Umfang der Maschine angeordneten Kühlkanäle 12 sind für einen eigenen, offenen Kühlkreislauf -angedeutet durch den Pfeil A - bestimmt und dienen für eine Durchzugsbelüftung mit Umgebungsluft. Ein weiterer eigener Kühlkreislauf ist im Inneren der Maschine vorgesehen, wobei dieser Kühlkreislauf - angedeutet mit dem geschlossenen Pfeil B - als geschlossener Kreis mit den Kühlkanälen 13, 14 ausgebildet ist. Dabei sind für diesen Kühlkreislauf B einerseits die Kühlkanäle 13 im Statorblechpaket 10 und anderseits die Kühlkanäle 14 im Rotorblechpaket 11 vorgesehen. Die Maschine weist also zwei getrennte Kühlkreisläufe A, B auf. Als Kühlmedium wird für beide Kühlkreisläufe A, B, ein gasförmiges Medium, vorzugsweise Luft, eingesetzt. Um einen ausgezeichneten Kühleffekt zu erreichen, werden die Strömungsrichtungen dieser beiden Kühlkreisläufe A, B entgegengesetzt geführt. Die vom Kühlkreislauf B abgeführte Wärme wird im Wärmeaustauschprinzip an den Kühlkreislauf A bereits im Stator 1 abgegeben, wodurch eine sehr effiziente Kühlung mit geringem konstruktiven Aufwand verbunden ist.

Zur Bewegung des Kühlmediums im offenen Kühlkreislauf A wird ein auf der Welle 2 angeordneter Lüfter 15 vorgesehen. In ganz speziellen Traktionsmaschinen könnte die Durchzugsbelüftung beispielsweise auch über ein eigenes Gebläse erfolgen, beispielsweise wenn eine Regelung der Kühlung über in der Maschine angeordnete Temperatursensoren erfolgt.

Zur Bewegung des Kühlmediums im geschlossenen Kühlkreislauf B wird ein weiterer Lüfter 16, der auf der Welle 2 oder am Rotor 3 befestigt ist, vorgesehen. Mindestens ein Lüfter 15, 16, vorzugsweise der für den geschlossenen Kühlkreislauf B, weist eine Deckscheibe 17 und eine Tragscheibe 18 auf, wobei zwischen der Deckscheibe 17 und der Tragscheibe 18 Flügel 19 vorgesehen sind. Durch derartige Lüfter 15, 16 wird das Kühlmedium nicht nur bewegt, sondern es wird quasi eine Druckkammer aufgebaut, die eine erzwungene Strömung des Kühlmediums bewirkt.

Zur Umlenkung des Kühlmediums im inneren Kühlkreislauf B sind Lagerschilde 20 vorgesehen. Diese Lagerschilde 20 weisen für einen besseren Kühleffekt innen und außen Kühlrippen auf. Außerdem trennen diese Lagerschilde 20 auch den inneren Kühlkreislauf B vom äußeren Kühlkreislauf A.

Wie später noch detaillierter ausgeführt wird, ist die Auslegung einer Traktionsmaschine vom sogenannten Fahrspiel, also vom dynamischen Verhalten abhängig. Das Fahrspiel ist aber proportional der Drehzahl der Maschine im Betrieb. Dadurch ist es möglich, den Kühlmediumfluss mindestens eines Kühlkreislaufes A, B, vorzugsweise den inneren Kühlkreislauf B, über diese Drehzahl zu regeln oder zu steuern. Natürlich können auch in der Maschine Temperatursensoren eingebaut sein, über die der Kühlmittelfluss geregelt wird.

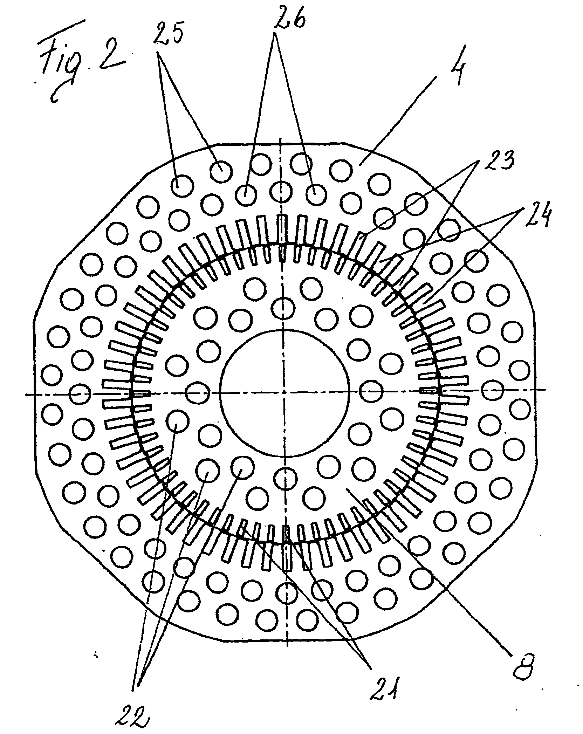

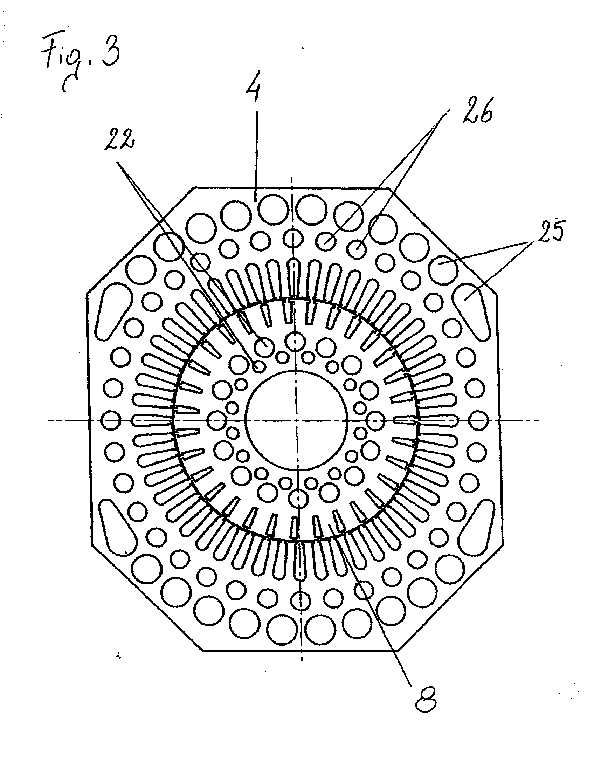

Um eine optimale Bauweise der Maschine zu erreichen, ist der Schnitt der einzelnen Statorbleche 4 von großer Bedeutung. An Hand der Fig. 2 und 3 wird auf die Blechschnitte näher eingegangen.

Das Rotorblech 8 weist an seinem Umfang Nuten 21 auf, die zur Aufnahme der Wicklung dienen. Darüber hinaus weist das Rotorblech 8 Bohrungen 22 auf, die bei geschichteten Rotorblechen 8 zum Rotorblechpaket 11 einen Kühlkanal 14 bilden, der für den inneren geschlossenen Kühlkreislauf B vorgesehen ist. Diese Bohrungen 22 sind, vorzugsweise mit gleichen Abständen, auf einem Teilkreis der Wellenachse gleichmäßig in Umfangsrichtung angeordnet. Entsprechend der Auslegung der Kühlmediummenge können die Bohrungen 8 auch auf zwei, unterschiedliche Radien aufweisenden, Teilkreisen angeordnet werden. Dabei werden sie vorteilhafterweise versetzt zueinander angeordnet. Auf Grund ihrer Aufgabe weisen die Rotorbleche 8 natürlich einen runden, kreisförmigen Umfang auf.

Im Gegensatz dazu müssen die Statorbleche 4 für das Statorblechpaket 10 keinen äußeren, runden Umfang aufweisen. Vom Standpunkt der Elektrotechnik aus, ist ein runder Außenumfang ideal. Um jedoch den gegebenenfalls vorgegebenen Einbaubedingungen entgegen zu kommen, wird der Außenumfang der Statorbleche 4 nur annähernd rund, oder auch elliptisch bzw. annähernd elliptisch ausgeführt. Natürlich kann diese, annähernd ideale, Bauform auch durch ein Vieleck erreicht werden.

Am inneren Umfang der Statorbleche 4 sind wieder die Nuten 23 für die Wicklung vorgesehen. Der Ordnung halber wird nur erwähnt, dass in Umfangsrichtung zwischen den Nuten 23 die Zähne 24 sind.

Um nun eine effiziente Kühlung der Maschine zu erreichen, weisen die Statorbleche 4 mindestens auf zwei Teilkreisen angeordnete Bohrungen 25, 26 auf, wobei die auf dem äußersten Teilkreis, also auf dem Teilkreis mit dem längsten Radius, vorgesehenen Bohrungen 25, bei zusammengefügtem Statorblechpaket 10, den Kühlkanal 12 für den Kühlkreislauf A bilden. Die am inneren Teilkreis vorgesehenen Bohrungen 26 bilden, bei zusammen gefügtem Statorblechpaket 10, den Kühlkanal 13 für den inneren, geschlossenen Kühlkreislauf B.

Alle diese Bohrungen 25, 26 sind gleichmäßig auf einem Teilkreis in Umfangsrichtung verteilt. Ferner sind die auf zwei Teilkreisen zur Wellenachse angeordneten Bohrungen 25, 26 radial versetzt.

Um nun speziellen Kühlungsproblemen abzuhelfen, können, gemäß Fig. 3, die Bohrungen 22, insbesondere die Bohrungen 25, 26 und hier wieder die äußersten Bohrungen 25 sektorweise, unterschiedliche Durchmesser aufweisen. Dadurch kann eine Kühlung erreicht werden, die Teile, Regionen bzw. Bereiche der Maschine gezielt auf noch vertretbare Temperaturen begrenzt.

Zur Berechnung und Auslegung der elektrischen Maschine ist ein Datenverarbeitungsprogramm vorgesehen, das zur Ermittlung von Zustandsgrößen, insbesondere der Temperaturen und Wärmeströme, für den stationären Endzustand und/oder für den dynamischen Fahrbetrieb, in der elektrischen Maschine dient. Dieses Datenverarbeitungsprogramm führt die Berechnungen über ein Wärmequellennetz unter Berücksichtigung der Kühlmittelströme, durch.

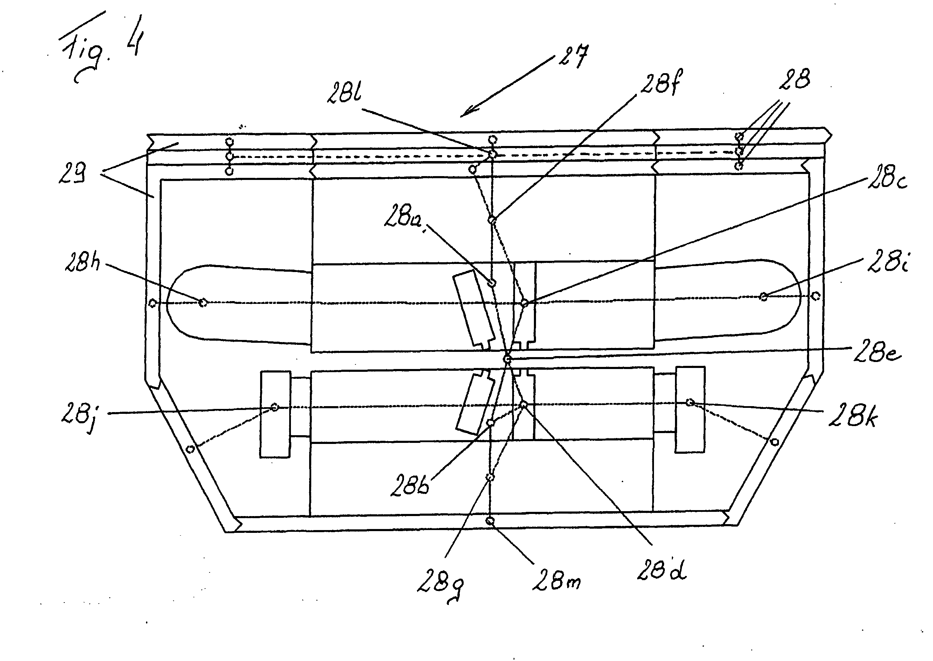

Gemäß der Fig. 4 ist eine Struktur eines Wärmequellennetzwerkes für eine doppelt durchzugsbelüftete elektrische Maschine als Prinzipschaltbild dargestellt.

Mit einem Datenverarbeitungsprogramm wird entsprechend der geometrischen Definition der Maschine, wie vorzugsweise Abmessungen, Nutenform, Wicklungsart, Materialeigenschaften, die Struktur des Wärmequellennetzes 27 erstellt. Weiters werden Knotenpunkte 28 für das Wärmequellennetz 27 festgelegt und zwischen den Knotenpunkten 28 die thermischen Übergangswiderstände definiert. Darüber hinaus werden die Kühlmittelströme 29 einbezogen und aus diesen Parametern werden die Temperaturen für den stationären Endzustand errechnet.

Es wird mindestens jeweils ein Knotenpunkt für die Zähne im Stator 28a und im Rotor 28b, für die Nuten jeweils im Stator 28c und im Rotor 28d, für den Luftspalt 28e, für das Statorjoch 28f, für das Rotorjoch 28g, für jede Seite des Wickelkopfes 28h, 28i und für den Kurzschlussring auf jeder Seite 28j, 28k festgelegt.

Zur genaueren Auslegung der Maschine kann im Statorjoch 28f und den angrenzenden Konstruktionsteilen mindestens ein weiterer Knotenpunkt 281, vorzugsweise im Bereich und/oder zwischen den Kühlkreisläufen, festgelegt werden und der zwischen den Knotenpunkten 28f, 281 auftretende Übergangswiderstand wird in die Berechnung einbezogen. Zum gleichen Zweck kann im Rotorjoch 28g im Bereich des Kühlkreislaufes 29 mindestens ein weiterer Knotenpunkt 28m festgelegt werden.

Erfindungsgemäß wird in der Berechnung der Verluste für die einzelnen Knotenpunkte 28 und/oder der thermischen Übergangswiderstände zwischen den einzelnen Knotenpunkten 28 das dynamische Verhalten der Maschine im Betrieb, insbesondere das Fahrspiel, berücksichtigt. Dies stellt einen weiteren Schritt zur Annäherung an die tatsächlichen Grenzwerte der Maschine dar.

Die thermischen Übergangswiderstände werden unter Berücksichtigung des dynamischen Verhaltens der Maschine im Betrieb, insbesondere der Drehzahl und/oder der Strömungsgeschwindigkeit und/oder der Menge des Kühlmittels während des Fahrspiels, berechnet. Daraus ergibt sich, - ebenfalls erwähnt - dass die Maschine nicht auf die Temperaturen des stationären Endzustandes berechnet wird, sondern auf die tatsächlichen Werte im Betrieb.

Das Netzwerk der thermischen Übergangswiderstände wird durch die thermischen Kapazitäten der den Knoten entsprechenden Regionen der Maschine ergänzt.

Ferner kann in der Berechnung der Verluste für die einzelnen Knotenpunkte 28 und/oder der thermischen Übergangswiderstände zwischen den einzelnen Knotenpunkten 28 die Temperaturabhängigkeit der Materialien mittels eines Temperaturfaktors berücksichtigt werden.

Das dynamische Verhalten der Maschine im Betrieb, insbesondere während des Fahrspiels, wird in der Berechnung dynamisch simuliert und daraus werden Mittelwerte gerechnet.

Ebenso werden bei der Berechnung der thermischen Übergangswiderstände Korrekturfaktoren eingeführt, die vorzugsweise aus Erfahrungswerten gebildet werden.

An Hand einiger Formeln wird das Verfahren zur Auslegung einer Maschine anhand eines Wärmequellennetzes näher erläutert.

Die Formeln für thermische Widerstände haben immer denselben Aufbau. Im Falle der Wärmeleitung lautet der thermische Widerstand

$$R_{th} = \frac{l}{\lambda \cdot A_Q}$$

mit

$R_{th}$     thermischer Widerstand
$\lambda$     spezifische Wärmeleitfähigkeit [W/m.K]
$A_Q$     Querschnitt, der für die Wärmeleitung zur Verfügung steht
$l$     Länge, über die Wärme transportiert wird.

Am Beispiel des thermischen Widerstandes $R_{th}$ zwischen Stator-Nut 23 und dem Stator-Zahn 24 sei die Anwendung dieser Formel demonstriert.

Es handelt sich um eine Serienschaltung aus einer Strecke im Wickelkupfer $R_{th,Cu}$ einer Strecke durch Isolation $R_{th,Is}$ und einer Strecke durch Eisen (Dynamoblech) $R_{th,Fe}$:

$$R_{th} = R_{th,Cu} + R_{th,Is} + R_{th,Fe}$$

Der thermische Widerstand im Wickelkupfer beträgt

$$R_{th,Cu} = \frac{\frac{b_{cu}}{2}}{\lambda_{Cu} \cdot 2 \cdot N_1 \cdot h_{Cu} \cdot l_{Fe}} \cdot k_{Korr}$$

mit

$b_{Cu}$     Breite des Wickelkupfers in der Nut
$\lambda_{Cu}$     Wärmeleitfähigkeit von Kupfer
$N_1$     Statornutenzahl (Es werden alle Nuten in einem thermischen Knoten zusammengefasst.)
$h_{cu}$     maßgebliche Höhe des Wickelkupfers in der Nut
$l_{Fe}$     Länge des Blechpaketes
$k_{Korr}$     Korrekturfaktor, der unter anderem berücksichtigt, dass die Verlustwärme im Wickelkupfer verteilt entsteht.

Der thermische Widerstand der Isolation beträgt

$$R_{th,Is} = \frac{b_{Is}}{\lambda_{Is} \cdot 2 \cdot N_1 \cdot h_{Cu} \cdot l_{Fe}} \cdot k_{Korr}$$

mit

$b_{Is}$     einseitige Dicke der Isolation
$\lambda_{Is}$     Wärmeleitfähigkeit des Isolationsmaterials
$k_{Korr}$     Korrekturfaktor

Der thermische Widerstand der Strecke im Eisen beträgt schließlich

$$R_{th,Fe} = \frac{\frac{b_{Zahn}}{2}}{\lambda_{Fe} \cdot 2 \cdot N_1 \cdot h_{Nut} \cdot l_{Fe}} \cdot k_{Korr}$$

mit

$b_{Zahn}$     Zahnbreite
$\lambda_{Fe}$     Wärmeleitfähigkeit von Eisen (Dynamoblech)
$h_{Nut}$     maßgebliche Nuthöhe
$k_{Korr}$     Korrekturfaktor, der unter anderem die Schichtung aus einseitig lackierten Dynamoblechen berücksichtigt.

Im Falle eines Wärmeüberganges A auf ein Kühlmedium lautet die Formel

$$\Lambda = \alpha . A_0$$

mit

$\alpha$     Wärmeübergangszahl [W/m$^2$.K]
$A_0$     Fläche, die für den Wärmeübergang zur Verfügung steht.

Die Wärmeübergangszahl $\alpha$ ist stark von den Strömungsverhältnissen und der Oberflächengeometrie (z.B. verrippte Oberfläche) abhängig.

Für die Auslegung der Maschine werden zur Berücksichtigung des dynamischen Verhaltens der Maschine zu den thermischen realen Widerständen auch thermische Kapazitäten hinzugefügt, über welche die zeitliche Abhängigkeit der Temperaturverteilung in der Maschine berücksichtigt werden kann. Durch das Hinzufügen der Kapazitäten werden komplexe thermische Widerstände geschaffen, in denen auch die thermische Zeitkonstante verankert ist. Die thermischen Kapazitäten werden aufgrund der Geometriematerialien und Randbedingungen der elektrischen Maschine festgelegt.

Anhand eines fiktiven oder realen Fahrspieles werden Werte, wie Drehzahl der Maschine, Geschwindigkeit oder Beschleunigung des angetriebenen Fahrzeugs und Verluste in Abhängigkeit der Zeit ermittelt. Zu den Verlusten zählen die Eisenverluste, Kupferverluste im Stator und Rotor sowie mechanische Verluste und sogenannte Zusatzverluste, welche alle anderen nicht zuordenbare Verluste beinhalten. Die Parameter in Abhängigkeit der Zeit entsprechend dem Fahrspiel werden zur thermischen Berechnung der Maschine herangezogen. Anhand des Wärmequellennetzes werden Differenzialgleichungen aufgestellt und durch deren Lösung die Temperaturen oder Wärmeströme in den Knoten des Wärmequellennetzes, welche bestimmte Stellen an der Maschine entsprechen, in Abhängigkeit der Zeit berechnet. Durch Aneinanderreihen mehrerer Fahrspiele nähert sich die ermittelte Temperatur einem bestimmten Grenzwert, im sogenannten Zustand der Beharrung. Diese Grenzwerte werden für die Auslegung der Maschine herangezogen. Durch die Berücksichtigung der dynamischen Verhältnisse kommt man sehr nahe an die realen Bedingungen heran, wodurch die elektrische Maschine optimal ausgelegt werden kann.

Abschließend sei der Ordnung halber darauf hingewiesen, dass in der Zeichnung einzelne Bauteile und Baugruppen zum besseren Verständnis der Erfindung unproportional und maßstäblich verzerrt dargestellt sind.

## Patentansprüche

1. Gekapselte, elektrische Maschine, vorzugsweise gehäuselose Traktionsmaschine, mit einem aus einem Blechpaket (10) aufgebauten Stator (1), mit einer rotierenden Welle (2) mit einem darauf befestigten aus einem Blechpaket (11) aufgebauten Rotor (3), wobei mehrere axiale Kühlkanäle (12, 13, 14) zur Führung eines fluidförmigen Kühlmediums im Statorblechpaket (10) und Rotorblechpaket (11) gleichmäßig in Umfangsrichtung verteilt angeordnet sind, und zumindest zwei getrennte Kühlkreisläufe (A, B) vorgesehen sind, **dadurch gekennzeichnet, dass** die im Statorblechpaket (10) vorgesehenen radial außen liegenden Kühlkanäle (12) einen äußeren, offenen Kühlkreislauf (A) bilden und dass die Kühlkanäle (13) im Stator (1) und die Kühlkanäle (14) im Rotor (3) zumindest einen weiteren inneren, geschlossenen Kühlkreislauf (B) bilden, der vom äußeren Kühlkreislauf (A) getrennt ist.

2. Elektrische Maschine nach Anspruch 1, **dadurch gekennzeichnet, dass** als Kühlmedium ein gasförmiges Medium, vorzugsweise Umgebungsluft, vorgesehen ist.

3. Elektrische Maschine nach Anspruch 1 oder 2, **dadurch gekennzeichnet, dass** das Statorblechpaket (10) aus annähernd runden oder elliptischen und/oder regelmäßigen vieleckigen Statorblechen (4) gebildet ist.

4. Elektrische Maschine nach mindestens einem der Ansprüche 1 bis 3, **dadurch gekennzeichnet, dass** auf der Welle (2) ein Lüfter (15) zur Bewegung des Kühlmediums für den äußeren Kühlkreislauf (A) angeordnet ist.

5. Elektrische Maschine nach mindestens einem der Ansprüche 1 bis 4, **dadurch gekennzeichnet, dass** auf der Welle (2) oder dem Rotor (3) ein Lüfter (16) zur Bewegung des Kühlmediums für den weiteren, inneren Kühlkreislauf (B) angeordnet ist.

6. Elektrische Maschine nach mindestens einem der Ansprüche 1 bis 5, **dadurch gekennzeichnet, dass** die Strömungsrichtung des Kühlmediums im inneren Kühlkreislauf (B) im Stator (1) entgegengesetzt zur Strömungsrichtung des Kühlmediums im äußeren Kühlkreislauf (A) verläuft.

7. Elektrische Maschine nach mindestens einem der Ansprüche 1 bis 6, **dadurch gekennzeichnet, dass** der Stator (1) aus, vorzugsweise gestanzten, Statorblechen (4) besteht und über Pressplatten (5) und Zugleisten (6) verpresst und verschweißt ist und die axialen Kühlkanäle (12, 13, 14) vorzugsweise als Bohrungen (22, 25, 26) ausgeführt sind, wobei die Kühlkanäle (12, 13, 14) für den äußeren Kühlkreislauf (A) und den inneren Kühlkreislauf (B) jeweils auf einem Teilkreis zur Wellenachse angeordnet sind.

8. Elektrische Maschine nach mindestens einem der Ansprüche 1 bis 7, **dadurch gekennzeichnet, dass** die Kühlkanäle (12, 13, 14), insbesondere sektorweise, unterschiedlichen Durchmesser aufweisen.

9. Elektrische Maschine nach mindestens einem der Ansprüche 1 bis 8, **dadurch gekennzeichnet, dass** die Kühlkanäle (12, 13, 14) im Stator (1) und/oder Rotor (3) auf zwei Teilkreisen zur Wellenachse angeordnet sind, wobei die Kühlkanäle (12, 13, 14) radial versetzt sind.

**10.** Elektrische Maschine nach mindestens einem der Ansprüche 1 bis 9, **dadurch gekennzeichnet, dass** der innere Kühlkreislauf (B) über Lagerschilde (20) vom äußeren Kühlkreislauf (A) getrennt ist.

**11.** Elektrische Maschine nach Anspruch 10, **dadurch gekennzeichnet, dass** die Lagerschilde (20) innen und/oder außen eine verrippte Oberfläche aufweisen.

**12.** Elektrische Maschine nach mindestens einem der Ansprüche 4 bis 11, **dadurch gekennzeichnet, dass** der Lüfter (15, 16) eine Deck- (17) und eine Tragscheibe (18) aufweist, wobei zwischen der Deck- (17) und der Tragscheibe (18) Flügel (19) vorgesehen sind.

**13.** Elektrische Maschine nach mindestens einem der Ansprüche 1 bis 12, **dadurch gekennzeichnet, dass** der Kühlmediumfluss mindestens für einen Kühlkreislauf (A, B) in Abhängigkeit von der Drehzahl der Maschine geregelt ist.

**14.** Elektrische Maschine nach mindestens einem der Ansprüche 1 bis 13, **dadurch gekennzeichnet, dass** der Kühlmediumfluss mindestens für einen Kühlkreislauf (A, B) in Abhängigkeit von der Temperatur im Statorblechpaket (10) und/oder Rotorblechpaket (11) der Maschine geregelt ist.

**15.** Elektrische Maschine nach mindestens einem der Ansprüche 1 bis 14, **dadurch gekennzeichnet, dass** zur Berechnung und Auslegung der elektrischen Maschine ein Datenverarbeitungsprogramm vorgesehen ist, das zur Ermittlung von Zustandsgrößen, insbesondere der Temperaturen und Wärmeströme, für den stationären Endzustand und/oder für den dynamischen Fahrbetrieb in der elektrischen Maschine dient, wobei dieses Datenverarbeitungsprogramm die Berechnungen über ein Wärmequellennetz unter Berücksichtigung der Kühlmittelströme durchführt.

**16.** Verfahren zur Auslegung einer elektrischen Maschine nach mindestens einem der Ansprüche 1 bis 15, wobei mit Hilfe eines Datenverarbeitungsprogramms entsprechend der geometrischen Definition der Maschine, wie Abmessungen, Nutenform, Wicklungsart und Materialeigenschaften ein Wärmequellennetz (27) erstellt wird, Knotenpunkte (28) für das Wärmequellennetz (27) festgelegt und zwischen den Knotenpunkten (28) die thermischen Übergangswiderstände definiert werden und in den Knotenpunkten (28) die Temperaturen für den stationären Endzustand der Maschine errechnet werden, **dadurch gekennzeichnet, dass** bei der Erstellung des Wärmequellennetzes (27) die Kühlmittelströme (29) einbezogen werden und dass die Temperaturen in den Knotenpunkten (28) für den dynamischen Zustand der Maschine errechnet werden, indem in die Berechnung der Verluste für die einzelnen Knotenpunkte (28) und/oder der thermischen Übergangswiderstände zwischen den einzelnen Knotenpunkten (28) das dynamische Verhalten der Maschine im Betrieb, insbesondere das Fahrspiel, berücksichtigt wird, wobei die thermischen Übergangswiderstände zwischen den einzelnen Knotenpunkten (28) durch die thermischen Kapazitäten der entsprechenden Regionen der Maschine ergänzt werden.

**17.** Verfahren nach Anspruch 16, **dadurch gekennzeichnet, dass** mindestens jeweils ein Knotenpunkt für die Zähne im Stator (28a) und im Rotor (28b), für die Nuten jeweils im Stator (28c) und im Rotor (28d), für den Luftspalt (28e), für das Statorjoch (28f), für das Rotorjoch (28g), für jede Seite des Wickelkopfes (28h, 28i) und für den Kurzschlussring auf jeder Seite (28j, 28k) festgelegt wird.

**18.** Verfahren nach Anspruch 16 oder 17, **dadurch gekennzeichnet, dass** im Statorjoch (28f) und den angrenzenden Konstruktionsteilen mindestens ein weiterer Knotenpunkt (281), vorzugsweise im Bereich und/oder zwischen den Kühlkreisläufen, festgelegt wird und der zwischen den Knotenpunkten (28f, 281) auftretende thermische Übergangswiderstand berechnet wird.

**19.** Verfahren nach Anspruch 17 oder 18, **dadurch gekennzeichnet, dass** im Rotorjoch (28g) im Bereich des Kühlkreislaufes (29) mindestens ein weiterer Knotenpunkt (28m) festgelegt wird.

**20.** Verfahren nach mindestens einem der Ansprüche 16 bis 19, **dadurch gekennzeichnet, dass** bei der Berechnung der thermischen Übergangswiderstände zwischen den Knotenpunkten (28) die Drehzahl der Maschine und/oder die Strömungsgeschwindigkeit und/oder Menge des Kühlmittels während des Fahrspiels, berücksichtigt werden.

**21.** Verfahren nach mindestens einem der Ansprüche 16 bis 20, **dadurch gekennzeichnet, dass** bei der Berechnung der Verluste für die Knotenpunkte (28) und/oder der thermischen Übergangswiderstände zwischen den Knotenpunkten (28) die Temperaturabhängigkeit der Materialien mittels eines Temperaturfaktors berücksichtigt werden.

**22.** Verfahren nach mindestens einem der Ansprüche 16 bis 21, **dadurch gekennzeichnet, dass** aus den errechneten Werten der Temperaturen für den dynamischen Zustand der Maschine, insbesondere während des Fahrspiels, Mittelwerte berechnet werden.

**23.** Verfahren nach mindestens einem der Ansprüche 16 bis 22, **dadurch gekennzeichnet, dass** bei der Berechnung der thermischen Übergangswiderstände zwischen den Knotenpunkten (28) Korrekturfaktoren eingeführt werden, die vorzugsweise aus Erfahrungswerten gebildet werden.

Fig. 1

EP 1 515 417 A2

Fig. 2

Fig. 3

Fig. 4

EP 1 515 417 A2